# EUROPÄISCHE PATENTSCHRIFT

(11) **EP 1 759 898 B1**
(45) Veröffentlichungstag und Bekanntmachung des Hinweises auf die Patenterteilung: **09.09.2009**
(21) Anmeldenummer: 06015333.5
(22) Anmeldetag: 24.07.2006
(51) Int. Cl.: B60H 1/34

(54) **Vorrichtung zur Belüftung eines Fahrzeugs**
Vehicle air venting device
Dispositif de ventilation de véhicule

(30) Priorität: 29.08.2005 DE 102005040993
(43) Veröffentlichungstag der Anmeldung: 07.03.2007
(73) Patentinhaber: Behr GmbH & Co. KG, 70469 Stuttgart (DE)
(72) Erfinder: Baruschke, Wilhelm, Dipl.-Ing., 73117 Wangen (DE); Denk, Walter, 71254 Ditzingen (DE); Lochmahr, Karl, Dipl.-Ing., 71665 Vaihingen/Enz (DE); Pitz, Eric, 70199 Stuttgart (DE); Treier, Joachim, 77728 Oppenau (DE)

(56) Entgegenhaltungen:
- EP-A2- 1 535 768
- WO-A-20/05016673
- DE-A1- 19 918 515
- US-B1- 6 170 274

## Beschreibung

Die Erfindung betrifft eine Vorrichtung zur Belüftung eines Fahrzeugs nach dem Oberbegriff des Anspruchs 1 und eine Verwendung dieser Vorrichtung.

WO 20051016673 A1 , das als nächstliegender Stand der Technik angesehen wird, beschreibt verschiedene Luftausströmer für Kraftfahrzeuge, bei denen es vorgesehen sein kann, dass eine Dosiervorrichtung oder eine Klappe eines ersten Luftkanals und eine zweite Dosiervorrichtung oder Klappe eines zweiten Luftkanals mittels einer Steuereinrichtung wechselseitig geöffnet und geschlossen werden, wobei das wechselseitige Öffnen und Schließen oszillierend erfolgen kann und die Oszillationsfrequenz einstellbar ist. Im Allgemeinen kann eine solche Einstellung eines Luftausströmers über Schrittmotoren erfolgen, die eine zumeist an dem Motor lokalisierte Steuerelektronik umfassen. Über ein zentrales Hauptsteuergerät wird mittels eines Datenbussystems eine Sollschrittzahl an den Aktuator übermittelt. Nach Verfahren des Schrittmotors um die Sollschrittzahl wird gegebenenfalls eine Istschrittzahl zur Kontrolle an das Hauptsteuergerät zurückgemeldet. Die Schrittfrequenz der Motoren ist dabei fest vorgegeben. Sie beträgt typisch 200 Hz oder auch 320 Hz. Insgesamt ist es hierdurch nicht oder nur aufwendig möglich, für einen allgemeinen Fall einen ersten Aktuator mit einem zweiten Aktuator zu synchronisieren. Vielmehr ist es mit erhöhtem Aufwand verbunden, den Bewegungsvorgang eines Aktuators auf definierte Weise zu variieren oder die Stellgeschwindigkeit eines Aktuators vorzugeben. Grundsätzlich kann dies zwar über eine Regelschleife zwischen Hauptsteuergerät und Steuerelektronik erzielt werden, führt jedoch im Allgemeinen zu einem stotternden Lauf der Aktuatoren und zu einer hohen Belastung des Bussystems aufgrund der großen ausgetauschten Datenmengen.

Es ist die Aufgabe der Erfindung, eine Vorrichtung zur Belüftung eines Fahrzeugs anzugeben, bei der eine verbesserte Bewegungssteuerung eines Aktuators, insbesondere im Hinblick auf eine kontrollierbare Stellgeschwindigkeit des Aktuators, erzielt ist.

Diese Aufgabe wird für eine eingangs genannte Vorrichtung erfindungsgemäß mit den kennzeichnenden Merkmalen des Anspruchs 1 gelöst. Durch die definierte Einstellung der Frequenz des Steuersignals zumindest eines Aktuators, wobei für unterschiedliche Drehwinkel α1 und α2 des ersten und zweiten Aktuators sich die Frequenzen F1 und F2 der Steuersignale der Aktuatoren nach der Bedingung α1: α2 = F1: F2 verhalten, ist eine Anpassung der Geschwindigkeit des einen Aktuators an den anderen Aktuator und somit eine Synchronisation der Bewegungen der Aktuatoren erzielbar. Ganz allgemein wird hierdurch eine zielgerichtete Kombination der Bewegungen der beiden Aktuatoren ermöglicht.

In vorteilhafter Ausführung umfasst zumindest einer der Aktuatoren einen Schrittmotor, wobei eine Anzahl von Pulsen des Steuersignals einer Anzahl von Stellschritten des Schrittmotors entspricht. Insbesondere vorteilhaft ist die Steuerelektronik des Aktuators bzw. Schrittmotors über einen Signalbus mit einem Hauptsteuergerät verbunden, wobei eine Sollfrequenz bzw. Soll-Schrittfrequenz des Steuersignals von dem Hauptsteuergerät an die Steuerelektronik übertragbar ist und wobei das Steuersignal für den Motor von der Steuerelektronik erzeugt wird. Hierdurch ist eine einfache technische Realisierung einer erfindungsgemäßen Vorrichtung ermöglicht, wobei eine hohe Belastung des Signalbusses durch die Übermittlung lediglich des Sollwertes der Schrittfrequenz vermieden wird. Durch die nachfolgende Generierung des mit der Frequenz gepulsten Steuersignals durch die Steuerelektronik ist eine nicht stockende Bewegung des als Schrittmotor ausgebildeten Aktuators bei zugleich einstellbar vorgegebener Schrittmotorgeschwindigkeit erzielt.

In einer vorteilhaften Ausführung der Erfindung wird mittels zumindest einer der mechanischen Stellmöglichkeiten eine Umstellung eines Luftstroms einer ersten Ausströmdüse von einer gerichteten Einstellung zu einer diffusen Einstellung bewirkt. Alternativ oder ergänzend dazu kann es auch vorgesehen sein, dass mittels zumindest einer der mechanischen Stellmöglichkeiten ein Richtungsleitwerk einer Ausströmdüse in seiner Richtung einstellbar ist (Wedelbetrieb). Es können auch beliebige Kombination von zwei oder mehr Aktuatoren zueinander synchronisiert angesteuert werden, so dass ein beliebiger kombinierter Bewegungsablauf von Richtungsleitwerken oder Spot-Diffus-Umstellungen erreicht werden kann. Dies gilt auch für den Fall unterschiedlicher Drehwinkel der einzelnen Aktuatoren.

Um einen Betrieb des Aktuators in einem kritischen Zustand, beispielsweise im Bereich einer mechanischen oder elektronischen Resonanzfrequenz, zu vermeiden, kann es vorgesehen sein, dass eine Auswahl von Frequenzen, insbesondere zumindest ein Frequenzbereich, von der Einstellbarkeit ausgenommen ist.

Bevorzugt ist es vorgesehen, dass mittels einer Vorgabe der Schrittfrequenz eine oszillierende oder periodische Stellbewegung des Aktuators einstellbar ist. Besonders bevorzugt vollführen dabei der erste Aktuator als auch der zweite Aktuator eine oszillierende Stellbewegung, wobei durch die Vorgabe der Frequenz, insbesondere von zwei verschiedenen, den jeweiligen Aktuatoren zugeordneten Schrittfrequenzen, eine Synchronisation des einen Aktuators zu dem anderen Aktuator erzielt ist. Auf diese Weise kann zuverlässig und einfach eine oszillierende Umstellung zweier verschiedener Ausströmdüsen zwischen einem Spotbetrieb und einem Diffusbetrieb erfolgen. Alternativ oder ergänzend kann auch eine oszillierende Umstellung der Richtungsleitwerke zweier verschiedener Ausströmdüsen vorgesehen sein, welche durch die erfindungsgemäße Synchronisation der Aktuatoren zueinander synchron verläuft.

Eine dem Erfindungsgedanken folgende Verwendung einer vorgenannten Vorrichtung wird durch die Merkmale des Anspruchs 9 angegeben. Allgemein kann eine erfindungsgemäße Vorrichtung vorteilhaft an Stellen Verwendung finden, an denen bisher mittels meist aufwendiger kinematischer Verbindungen oder Steuermitteln verschiedene, zueinander korrelierte Klappen verstellt werden. Dies kann die Einstellung der Luftverteilung einer Fahrzeug-Klimaanlage sein, etwa zur Regelung von Entfrostungs-, Fußraum- und Belüftungsklappen über einen gemeinsamen Stellmotors und eine die Klappen verbindende, gegebenenfalls einstellbare Kinematik. Durch die erfindungsgemäße Vorrichtung können solche zusammenhängenden Bewegungsabläufe auf einfache und kostengünstige Weise durch Verwendung mehrerer Aktuatoren nachgebildet werden, wobei regelmäßig zusätzliche Freiheitsgrade zur Verbesserung der Funktionsvielfalt hinzukommen. Ein weiteres konkretes Beispiel ist der Einsatz in Klimaanlagen mit bezüglich des Fahrzeugsraumes links-rechts-getrennter Luftverteilung, die bisher meist über eine zentrale Kinematik realisiert wird. Konstruktiv bedingte unterschiedliche Klappenwinkel für die linke und rechte Seite können durch die erfindungsgemäße Vorrichtung besonders einfach kompensiert werden. Ebenso ist zum Beispiel in einem sogenannten "Mono-Modus" einer zweizonigen Klimaregelung eine einfache Synchronisation der Luft- und/oder Temperaturklappen der linken und rechten Seite der Klimaanlage ermöglicht.

Weitere Vorteile und Merkmale ergeben sich aus dem nachfolgend beschriebenen Ausführungsbeispiel sowie aus den abhängigen Ansprüchen.

Nachfolgend wird ein bevorzugtes Ausführungsbeispiel einer erfindungsgemäßen Vorrichtung beschrieben und anhand der anliegenden Zeichnungen näher erläutert.
- Fig. 1: zeigt ein Diagramm, in dem die Verstellwinkel von zwei erfindungsgemäß zueinander synchronisierten Aktuatoren von. Ausströmdüsen über die Zeit eingetragen sind.
- Fig. 2: zeigt eine räumliche Ansicht einer Ausströmdüse einer erfindungsgemäßen Vorrichtung.

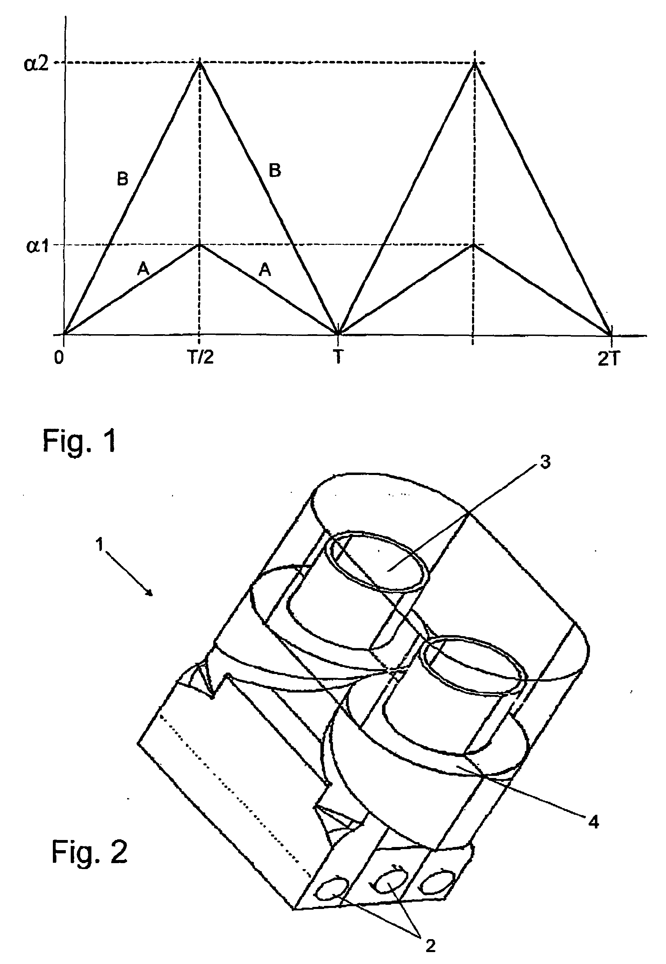

Das bevorzugte Ausführungsbeispiel der erfindungsgemäßen Vorrichtung umfasst zwei Ausströmdüsen 1, die jeweils von der in Fig. 2 dargestellten Bauart sind. Jede dieser Ausströmdüsen 1 weist eine nicht dargestellte mechanische Stellmöglichkeit auf, über die einen jeweiligen ersten und zweiten Aktuator (nicht dargestellt) mit Luftklappen 2 der Ausströmdüsen 1 verbindbar ist. Die Luftklappen 2 bewirken je nach Stellung eine Luftausströmung nur durch einen zentralen, im Wesentlichen zylindrischen Ausströmbereich 3 oder nur durch einen randseitigen, spiraligen Ausströmbereich 4 oder durch beide Bereiche 3, 4. Das Ausströmen der Luft durch den zentralen Bereich 3 ist ein gerichtetes Ausströmen (Spot-Einstellung), wogegen das Ausströmen durch die randseitige Leiteinrichtung 4 ein diffuses Ausströmen ist. Durch geeignetes Betätigen der Klappen 2 über die Stellmöglichkeit und den Aktuator ist somit für jede der beiden Ausströmdüsen 1 eine kontinuierliche Umstellung zwischen einem Spotbetrieb und einem Diffusbetrieb möglich. Die Ausströmdüsen 1 unterscheiden sich im Allgemeinen in Details ihrer Ausformung und in der Auslegung der mechanischen Stellmöglichkeit. Hierdurch ist selbst bei baugleicher Ausführung der beiden Aktuatoren einer Verstellung der Ausströmdüsen 1 ein jeweils unterschiedlicher Drehwinkel der Aktuatoren zugeordnet. Die Aktuatoren sind Schrittmotoren, die über eine an ihnen angeordnete Steuerelektronik auf an sich bekannte Weise ansteuerbar sind. Die Steuerelektronik umfasst im allgemeinen einen Mikroprozessor und/oder einen ASIC. In der Steuerelektronik wird ein im Wesentlichen pulsförmiges Steuersignal für die Schrittmotoren erzeugt (Schrittmuster), wobei jeder der Pulse einen Schritt des Schrittmotors bewirkt. Somit ist die Drehgeschwindigkeit des Motors proportional zu der Frequenz des gepulsten Steuersignals.

Die jeweilige Steuerelektronik des jeweiligen Schrittmotors ist über ein Signalbussystem des Kraftfahrzeugs mit einem zentralen Hauptsteuergerät verbunden. Durch Übermittlung von Daten von dem Hauptsteuergerät an die Steuerelektroniken der Schrittmotoren kann sowohl die Laufweite (Gesamtpulszahl) als auch die Laufgeschwindigkeit, nämlich die Frequenz des Steuersignals, eingestellt werden. Die Parametrisierung kann dabei auch eine indirekte sein, z. B. indem nicht die Gesamtpulszahl zur Einstellung der Laufweite übermittelt wird, sondern die Laufdauer, welche bei gegebener Frequenz der Laufweite entspricht.

### Die Erfindung funktioniert nun wie folgt:

Das Hauptsteuergerät erteilt über den Signalbus den Befehl, den ersten Schrittmotor mit einer ersten Frequenz f1 und den zweiten Schrittmotor mit einer zweiten Frequenz f2 zu starten, wobei eine Laufweite von f1*T Schritten des ersten Motors und von f2*T Schritten des zweiten Motors erfolgen soll. T ist dabei die Periodendauer einer Oszillation zwischen Spot- und Diffuseinstellung eines oszillierenden Betriebsmodus der Ausströmdüsen. Ziel ist es dabei, dass nach der Zeit T jede der Ausströmdüsen in ihre Ausgangsstellung zurückgekehrt ist und zwischenzeitlich eine vollständige Umschaltung zwischen diffusem Betrieb und Spotbetrieb stattgefunden hat. Nach Erhalt des Befehls wird von der jeweiligen Steuerelektronik das Steuersignal für den jeweiligen Schrittmotor generiert und die erforderliche Anzahl von Pulsen aufrecht erhalten. Nach Ende einer Periode, die durchaus bis zu mehreren Sekunden dauern kann, kann eine Kontrollabfrage nach dem Vorliegen einer gewünschten Ausgangsstellung erfolgen, wonach eine weitere Oszillation gestartet werden kann. Die Kontrollabfrage ist vorteilhaft, aber nicht unbedingt erforderlich.

Das Diagramm aus Fig. 1 zeigt eine Drehwinkel-Zeit-Kurven A, B des ersten bzw. zweiten Aktuators. Wie dem Diagramm entnommen werden kann, muss der erste Aktuator (Kurve A) zur Erzielung einer solchen vollen Periode der Dauer T mit konstanter Winkelgeschwindigkeit bis zu einem Drehwinkel α1 bei T/2 laufen und nachfolgend auf seine Ausgangsstellung (typisch: 0°) zurückgestellt .werden. Der zweite Aktuator muss innerhalb der Periodendauer T bis zu einem Drehwinkel or2 und dann zurück laufen. Die hierzu erforderlichen unterschiedlichen Drehgeschwindigkeiten der beiden Aktuatoren werden durch die unterschiedlichen Frequenzen f1, f2 der Steuersignale realisiert, wobei unter der Bedingung der Synchronisation (gleiche Periodendauer T für beide Verstellungen) gilt: α1 : α2 = f1 : f2.

## Patentansprüche

1. Vorrichtung zur Belüftung eines Fahrzeugs, umfassend
eine einstellbare Luftleitvorrichtung (1) mit mindestens einer ersten und einer zweiten mechanischen Stellmöglichkeit (2),
einen ersten und zumindest einen zweiten elektromechanischen Aktuator, wobei jeder der Aktuatoren jeweils einer der Stellmöglichkeiten (2) als Antrieb zugeordnet ist, und
eine Steuerelektronik zur Ansteuerung der Aktuatoren,
wobei eine Stellgeschwindigkeit von zumindest einem der Aktuatoren von der Frequenz (f1, f2) eines dem Aktuator zugeführten Steuersignals abhängt,
**dadurch gekennzeichnet,**
**dass** die Frequenz (f1, f2) des Steuersignals des einen Aktuators zumindest in einem bestimmten Betriebsmodus auf eine Stellgeschwindigkeit des anderen Aktuators abgestimmt ist, wobei für unterschiedliche Drehwinkel α1 und α2 des ersten und zweiten Aktuators sich die Frequenzen f1 und f2 der Steuersignale der Aktuatoren nach der Bedingung α1 : α2 = f1 : f2 verhalten.

2. Vorrichtung nach Anspruch 1, **dadurch gekennzeichnet, dass** zumindest einer der Aktuatoren einen Schrittmotor umfasst, wobei eine Anzahl von Pulsen des Steuersignals einer Anzahl von Stellschritten des Aktuators entspricht.

3. Vorrichtung nach Anspruch 2, **dadurch gekennzeichnet, dass** die Steuerelektronik über einen Signalbus mit einem Hauptsteuergerät verbunden ist, wobei eine Sollfrequenz des Steuersignals von dem Hauptsteuergerät über den Signalbus an die Steuerelektronik übertragbar ist und wobei das Steuersignal von der Steuerelektronik erzeugt wird.

4. Vorrichtung nach einem der vorhergehenden Ansprüche, **dadurch gekennzeichnet, dass** mittels zumindest einer der mechanischen Stellmöglichkeiten (2) eine Umstellung eines Luftstroms einer ersten Ausströmdüse (1) von einer gerichteten Einstellung (3) zu einer diffusen Einstellung (4) bewirkt wird.

5. Vorrichtung nach einem der vorhergehenden Ansprüche, **dadurch gekennzeichnet, dass** mittels zumindest einer der mechanischen Stellmöglichkeiten (2) ein Richtungsleitwerk einer Ausströmdüse in seiner Richtung einstellbar ist.

6. Vorrichtung nach einem der vorhergehenden Ansprüche, **dadurch gekennzeichnet, dass** eine Auswahl von Frequenzen, insbesondere zumindest ein Frequenzbereich, von der Einstellbarkeit ausgenommen ist.

7. Vorrichtung nach einem der vorhergehenden Ansprüche, **dadurch gekennzeichnet, dass** mittels einer Vorgabe der Frequenz (f1, f2) eine oszillierende oder periodische Stellbewegung des Aktuators regelbar ist.

8. Vorrichtung nach Anspruch 7, **dadurch gekennzeichnet, dass** sowohl der erste Aktuator als auch der zweite Aktuator eine oszillierende oder periodische Stellbewegung vollführen, wobei durch die Vorgabe der Frequenz, insbesondere von zwei verschiedenen, den jeweiligen Aktuatoren zugeordneten Frequenzen, eine Synchronisation des einen Aktuators zu dem anderen Aktuator erzielt ist.

9. Verwendung einer Vorrichtung nach Anspruch 1 zur Ansteuerung von Bewegungen zumindest zweier Steuerklappen eines Luftsteuersystems eines Kraftfahrzeugs, die auf herkömmliche Weise über eine Verbindungskinematik in ihrer Bewegung relativ zueinander gesteuert sind.

## Claims

1. Vehicle air venting device, comprising an adjustable air guiding device (1) with at least a first and a second mechanical adjustment possibility (2), a first and at least a second electromechanical actuator, wherein each of the actuators is respectively assigned as drive to one of the adjustment possibilities (2),
and a control electronics for activating the actuators,
wherein an adjustment speed of at least one of the actuators depends on the frequency (f1, f2) of a control signal applied to the actuator,
**characterised in that** the frequency (f1, f2) of the control signal of the one actuator is adjusted to an adjustment speed of the other actuator at least in a certain operating mode, wherein the frequencies f1 and f2 of the control signals of the actuators behave according to the condition α1 : α2 = f1 : f2 for different rotation angles α1 and α2 of the first and the second actuator.

2. Device according to claim 1, **characterised in that** at least one of the actuators comprises a stepping motor, wherein a number of pulses of the control signal corresponds to a number of adjustment steps of the actuator.

3. Device according to claim 2, **characterised in that** control electronics is connected to a main control device via a signal bus, wherein a set frequency of the control signal can be transferred from the main control device to the control electronics via the signal bus, and wherein the control signal is generated by the control electronics.

4. Device according to one of the previous claims, **characterised in that** a changeover of an air flow of a first exhaust nozzle (1) from a directed adjustment (3) to a diffuse adjustment (4) is effected by means of at least one of the mechanical adjustment possibilities (2).

5. Device according to one of the previous claims, **characterised in that** a direction control of a an exhaust nozzle can be adjusted in its direction by means of at least one of the mechanical adjustment possibilities (2).

6. Device according to one of the previous claims, **characterised in that** a selection of frequencies, especially at least one frequency region, is excluded from the adjustability.

7. Device according to one of the previous claims, **characterised in that** an oscillating or periodic adjustment movement of the actuator can be controlled by means of providing the frequency (f1, f2).

8. Device according to claim 7, **characterised in that** the first actuator and the second actuator carry out an oscillating or periodic adjustment movement, wherein a synchronisation of one actuator to the other actuator is achieved by providing the frequency, particularly two different frequencies assigned to the respective actuators.

9. Use of a device according to claim 1 for the activation of movements of at least two control flaps of an air control system of a vehicle, which are controlled relative to one another in a conventional manner via connection kinematics.

## Revendications

1. Dispositif de ventilation d'un véhicule automobile, comprenant
- un dispositif déflecteur d'air (1) réglable comportant au moins une première et une deuxième possibilités de réglage mécanique (2),
- un premier et au moins un deuxième actionneurs électromécaniques, où chacun des actionneurs est associé à chaque fois, comme entraînement, à l'une des possibilités de réglage (2), et
- une électronique de commande pour l'asservissement des actionneurs
où une vitesse de réglage d'au moins l'un des actionneurs dépend de la fréquence (f1, f2) d'un signal de commande fourni à l'actionneur,
**caractérisé en ce que** la fréquence (f1, f2) du signal de commande de l'un des actionneurs est réglée, au moins dans un mode de fonctionnement déterminé, sur une vitesse de réglage de l'autre actionneur, où, pour différents angles de rotation α1 et α2 des premier et deuxième actionneurs, les fréquences f1 et f2 des signaux de commande des actionneurs se comportent selon la condition α1 : α2 = f1 : f2.

2. Dispositif selon la revendication 1, **caractérisé en ce qu'**au moins l'un des actionneurs comprend un moteur pas à pas, où un nombre d'impulsions du signal de commande correspond à un nombre d'étapes de réglage de l'actionneur.

3. Dispositif selon la revendication 2, **caractérisé en ce que** l'électronique de commande est connectée, via un bus signal, à un appareil de commande principal, où une fréquence de consigne du signal de commande provenant de l'appareil de commande principal peut être transmise à l'électronique de commande, via le bus signal, et où le signal de commande est produit par l'électronique de commande.

4. Dispositif selon l'une quelconque des revendications précédentes, **caractérisé en ce que,** au moyen d'au moins l'une des possibilités de réglage mécanique (2), une modification de passage d'un flux d'air d'une première buse de diffusion (1) est déclenchée, ledit flux d'air passant d'un réglage dirigé (3) à un réglage diffus (4).

5. Dispositif selon l'une quelconque des revendications précédentes, **caractérisé en ce que,** au moyen d'au moins l'une des possibilités de réglage mécanique (2), un déflecteur directionnel d'une buse de diffusion peut être réglé concernant sa direction.

6. Dispositif selon l'une quelconque des revendications précédentes, **caractérisé en ce qu'**un certain nombre de fréquences, en particulier au moins une plage de fréquences, est exclu(e) des possibilités de réglage.

7. Dispositif selon l'une quelconque des revendications précédentes, **caractérisé en ce qu'**un mouvement de réglage de l'actionneur, oscillant ou périodique, est réglable au moyen d'une valeur prédéfinie de la fréquence (f1, f2).

8. Dispositif selon la revendication 7, **caractérisé en ce qu'**aussi bien le premier actionneur que le deuxième actionneur exécutent un mouvement de réglage oscillant ou périodique, où grâce à la valeur prédéfinie de la fréquence, en particulier de deux fréquences différentes affectées aux actionneurs respectifs, on obtient une synchronisation de l'un des actionneurs par rapport à l'autre actionneur.

9. Utilisation d'un dispositif selon la revendication 1, servant à l'asservissement de mouvements d'au moins deux volets de commande d'un système de commande d'air d'un véhicule automobile, volets qui, dans leur mouvement l'un rapport à l'autre, sont commandés de façon habituelle, par une cinématique de liaison.
